# EUROPÄISCHE PATENTANMELDUNG

(11) **EP 1 279 838 A1**
(43) Veröffentlichungstag der Anmeldung: **29.01.2003**
(21) Anmeldenummer: 02016011.5
(22) Anmeldetag: 18.07.2002
(51) Int. Cl.: F16B 12/04, F16B 12/06

(54) **Verfahren zur Herstellung einer unlösbaren Verbindung zweier Werkstücke**

(30) Priorität: 26.07.2001 CH 13972001
(71) Anmelder: Tisch & Stuhl Willisau AG, 6130 Willisau (CH)
(72) Erfinder: Hodel, Benno, 6144 Zell (CH)
(74) Vertreter: Kemény AG Patentanwaltbüro

(57) **Zusammenfassung**

Um zwei Werkstoffteile (31, 33) entlang eines gemeinsamen, flächigen Bereiches (9) zu verbinden, werden im flächigen Bereich des einen Teils (31) Lochungen (35) vorgesehen, in welche bolzenartige oder stiftartige Elemente (1) mit ihrem einen Ende (3) eingeführt und fest angeordnet werden. Anschliessend wird das andere Teil (33) mit im anderen flächigen Bereich kongruent angeordneten Lochungen bzw. Bohrungen (37) über die anderen Enden (5) der bolzen- oder stiftartigen Elemente (1) aufgesetzt und die beiden flächigen Bereiche (9', 9") aneinandergefügt. Schliesslich wird in mindestens einem Teil der Bohrungen mindestens im anderen Teil ein härtender Klebstoff injiziert, um mindestens die anderen Enden (5) der Bolzen bzw. Stifte (1) fest mit dem anderen Teil (33) zu verbinden.

## Beschreibung

Die vorliegende Erfindung betrifft ein Verfahren zum Verbinden zweier Werkstoffteile entlang eines gemeinsamen flächigen Bereiches, die Verwendung des erfindungsgemässen Verfahrens zum Herstellen einer geleimten, unlösbaren Holzverbindung sowie eine erfindungsgemäss hergestellte Holzverbindung.

Das geleimte unlösbare Verbinden zweier aus Holz bestehender Werkstücke entlang einer gemeinsamen Fläche ist bekannt. In der Regel wird zusätzlich vorgeschlagen, in der gemeinsamen Verbindungsfläche senkrecht zur Fläche verlaufende Stifte oder Bolzen anzuordnen, um die Festigkeit der Verbindung zu erhöhen. Derartige Stifte oder Bolzen können sowohl aus Holz, aus Stahl oder anderen Werkstoffen bestehen, und diese Bolzen ragen je von der gemeinsamen Verbindungsfläche weitgehendst senkrecht in die beiden Werkstücke hinein.

Das Problem liegt nun darin, dass die erwähnten Bolzen aus Holz, Stahl oder einem anderen Werkstoff aus jeweiligen Lochungen in den beiden Werkstücken ausreissen können und somit den Schwachpunkt einer Verbindung bilden.

Es ist daher eine Aufgabe der vorliegenden Erfindung, ein Verfahren zum Herstellen einer unlösbaren, festen Verbindung zweier Werkstücke vorzuschlagen, welche entlang einer gemeinsamen Verbindungsfläche aneinander stossend zu verbinden sind.

Erfindungsgemäss wird die gestellte Aufgabe mittels einem Verfahren gemäss dem Wortlaut nach Anspruch 1 gelöst.

Das erfindungsgemässe Verfahren zeichnet sich durch die nachfolgenden Verfahrensschritte aus:
- Im flächigen Bereich des einen Werkstückes bzw. Werkstoffteiles werden in vorgesehenen Lochungen bolzenoder stiftartige Elemente mit ihrem einen Ende eingeführt und fest angeordnet;
- anschliessend wird das andere Werkstoffteil bzw. andere Werkstück mit im anderen flächigen Bereich kongruent angeordneten Lochungen über die anderen Enden der bolzen- oder stiftartigen Elemente aufgesetzt und die beiden flächigen Bereiche aneinandergefügt, wobei dies natürlich voraussetzt, dass die Tiefe der Lochungen im anderen Werkstoffteil mindestens entsprechend der aus dem einen Teil ausragenden anderen Enden der Elemente entspricht;
- und schliesslich, dass in mindestens einen Teil der Bohrungen im anderen Teil ein härtender Klebstoff injiziert wird, um die anderen Enden der Bolzen bzw. Stifte mit dem anderen Teil fest zu verbinden.

Vorzugsweise sind am anderen Ende der bolzenartigen oder stiftartigen Elemente sogenannte Rückhalteorgane vorgesehen, um beim Aufsetzen des anderen Teil und dem Zusammenfügen der beiden Flächen ein Wiederentfernen des anderen Teils von den stift- oder bolzenartigen Elementen bzw. vom einen Werkstoffteil mindestens zu erschweren, vorzugsweise zu verhindern. Die Verbindung der beiden Teile mittels der stift- oder bolzenartigen Elemente ist zunächst nicht für eine gebrauchsmässige Belastung vorgesehen, sondern primär soll die Verbindung lediglich montagetechnisch belastbar sein. Gegebenenfalls sind die beiden Werkstoffteile bzw. Werkstücke mittels einer Haltevorrichtung, wie beispielsweise mit einer Presse, zusammenzuhalten, um beim Injizieren des härtenden Klebstoffes ein Auseinandertreiben der beiden Werkstoffteile zu verhindern.

Weitere bevorzugte Verfahrensmerkmale sind in den abhängigen Ansprüchen charakterisiert.

Das erfindungsgemässe Verfahren eignet sich insbesondere und speziell für das geleimte und unlösbare Verbinden von zwei Holzstücken entlang einer gemeinsamen Verbindungsfläche. Selbstverständlich können auch andere Werkstoffe erfindungsgemäss miteinander verbunden werden, wie beispielsweise Werkstoffteile aus einem polymeren Material, Werkstoffteile aus Metall etc. So ist die erfindungsgemässe Verbindung auch denkbar für das Verbinden von Teilen aus Kunststoff, wie insbesondere aus faserverstärkten Kunststoffen wie für auch das Verbinden einerseits von Holz mit andererseits einem Polymer, von einem Metallkörper mit einem Holzteil, von Metall mit einem Polymerkörper, etc.

Die Erfindung wird nun beispielsweise und unter Bezug auf die beigefügten Figuren näher erläutert.

Dabei zeigen:
- Fig. 1:: in Längsansicht den beim erfindungsgemässen Verfahren verwendeten Bolzen bzw. Stift;
- Fig. 2:: einen Schnitt entlang der Linie A-A aus Fig. 1;
- Fig. 3:: in Draufsicht, das eine Ende des Stifts bzw. Bolzens aus Fig. 1, und
- Fig. 4:: eine erfindungsgemäss hergestellte Holz/Holz-Verbindung mittels Bolzen, dargestellt in den Fig. 1 bis 3.

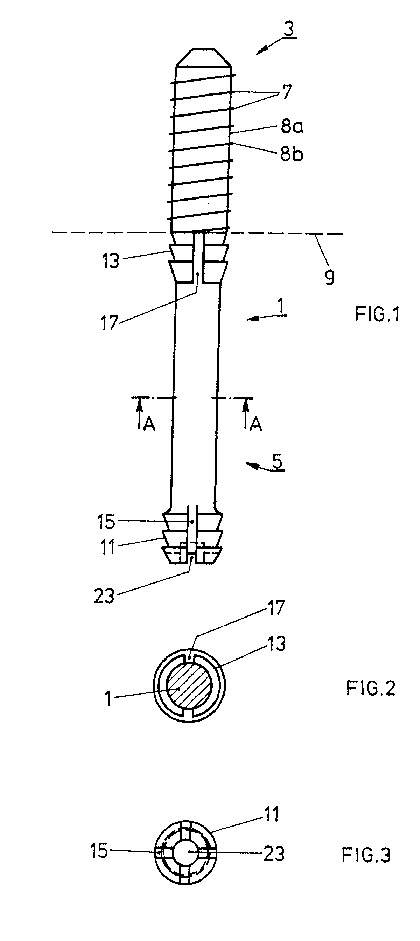

Fig. 1 zeigt schematisch und in Längsansicht einen beim erfindungsgemäss beschriebenen Verfahren verwendeten Stift bzw. Bolzen 1, welcher vorzugsweise aus Stahl oder Aluminium hergestellt ist, je nach herzustellender Verbindung aber auch aus einem anderen Material, wie beispielsweise einem polymeren Material gefertigt sein kann. So sind auch Bolzen aus verstärktem Kunststoff denkbar, wie beispielsweise aus einem kohlenstoff- oder aramidfaserverstärkten Polymer.

Am einen Endbereich 3 weist der Stift oder Bolzen 1 ein Einschraubgewinde 7 auf, bei welchem es sich vorzugsweise um ein sogenanntes selbstfurchendes Gewinde handelt. Mit diesem Gewinde wird der Bolzen oder Stift 1 in entsprechende Lochungen bzw. Kernbohrungen in der zu verbindenden Fläche im einen Werkstoffteil fest eingeschraubt. Infolge des selbstfurchenden Gewindes 7 ist diese Schraubverbindung besonders stabil, und ein Ausreissen des Bolzens ist praktisch unmöglich. Die Stabilität der Schraubverbindung ergibt sich insbesondere auch durch die Ausbildung des Gewindes, indem zwischen den einzelnen Gewindegängen 8b je eine flächige Gewindebasis 8a ausgebildet ist. Damit der Stift spielfrei in die entsprechende Lochung bzw. Kernbohrung eingeschraubt werden kann, entspricht der Durchmesser der Kernbohrung dem Durchmesser des Bolzens oder des Stifts 1 im Bereich der flächigen Basis 8a, so dass lediglich die Gewindegänge 8b beim Einschrauben des Bolzens oder Stifts 1 in das Werkstoffteil hineingetrieben werden.

Nach Einschrauben des Bolzens 1 in Bohrungen im einen Werkstück steht der Stift 1 mit seinem anderen Bereich 5 von der gestrichelt eingezeichneten Oberfläche 9 des einen Werkstückes vor, welche Oberfläche 9 schliesslich die Trennfläche oder Verbindungsfläche der beiden Werkstücke darstellt. An diesem anderen Bereich 5 sind endständig sowie im Bereich nahe der Trennfläche 9 seitlich vorstehende Rückhalteorgane 11 bzw. 13 vorgesehen, welche keilförmig oder konisch den Stift oder Bolzen 1 weitgehendst peripher umfassend, nach aussen vorstehend angeordnet sind. Durch Anordnen mehrerer derartiger Organe hintereinander entsteht im Längsschnitt eine zackenartige oder hakenartige Ausgestaltung, welche nach Einführen des anderen Bereiches 5 in entsprechende Lochungen im anderen Werkstoffteil ein Wiederentfernen des Bolzens weitgehendst verhindert.

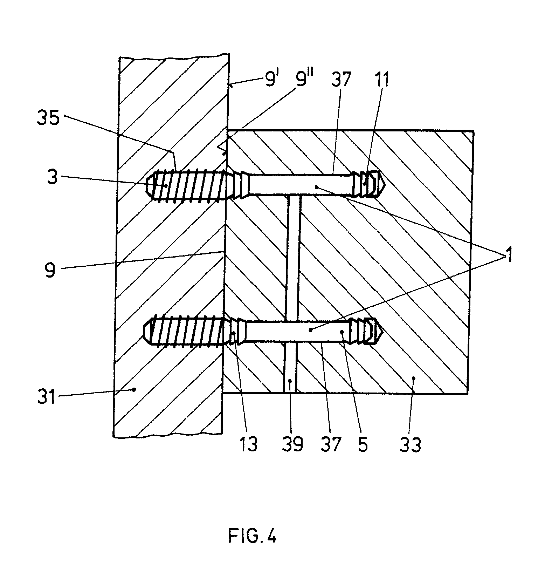

Schliesslich sind insbesondere an den Rückhalteorganen 11 und 13 seitliche, in Bolzenlängsrichtung verlaufende Einkerbungen 15 bzw. 17 vorgesehen, auf deren Funktion später unter Bezug auf Fig. 4 einzugehen ist.

Schliesslich kann der erfindungsgemäss verwendete Bolzen 1 wenigstens endständig im Bereich 5 hohl ausgebildet sein, was in Fig. 1 mit dem Bezugszeichen 23 bezeichnet ist, und welcher Hohlraum gestrichelt dargestellt ist.

Fig. 2 zeigt einen Schnitt durch den Bolzen 1 aus Fig. 1 entlang der Linie A-A in Richtung gegen die Verbindungsfläche 9. Deutlich erkennbar sind die seitlich vorstehenden Rückhalteorgane 13 sowie die längs ausgebildeten Einkerbungen 17. Der Kern des Bolzens kann sowohl ausgefüllt sein, wie auch hohl ausgebildet sein.

Fig. 3 schliesslich zeigt eine Ansicht auf das Ende des Endbereiches 5 des Bolzens 1, wobei nebst den seitlich vorstehenden Rückhalteorganen 11, den längsausgebildeten Einkerbungen 15 auch der endständig ausgebildete Kreuzschlitzeinsatz und der mittig ausgebildete Hohlraum 23 erkennbar ist. Dieser Kreuzschlitzeinsatz dient beispielsweise zum Eindrehen des Bolzens unter Verwendung eines entsprechenden in den Kreuzschlitzeinsatz passenden Werkzeuges.

Anhand von Fig. 4 nun soll das erfindungsgemäss vorgeschlagene Verfahren näher erläutert werden, unter Verwendung eines Stifts oder Bolzens, dargestellt in den Fig. 1 bis 3.

Im einen Werkstoffteil 31, beispielsweise bestehend aus Holz, sind Lochungen bzw. Bohrungen 35 vorgesehen. In diese Bohrungen wird der in Fig. 1 dargestellte Stift oder Bolzen 1 mit dem einen Ende 3, aufweisend ein selbstfurchendes Gewinde, eingeschraubt.

Anschliessend wird das andere Werkstoffteil 33 mit kongruent ausgebildeten Lochungen bzw. Bohrungen 37 über die anderen Enden 5 der Stifte bzw. Bolzen 1 aufgesetzt und gegen das eine Werkstoffteil 31 bewegt, bis die beiden Oberflächen 9' und 9" aneinanderstossen, um so die gemeinsame Verbindungsfläche 9 zu bilden.

Durch die am anderen Ende 5 des Bolzens oder Stifts ausgebildeten Rückhalteorgane 11 bzw. 13 wird ein Wiederentfernen des anderen Werkstoffteils 33 verhindert. Mit anderen Worten besteht bereits eine provisorisch feste Verbindung der beiden Werkstoffteile 31 und 33. Vorzugsweise werden anschliessend die beiden Werkstoffteile mittels einer Presse zusammengedrückt, um beim anschliessenden Injizieren des Klebstoffes ein Auseinandertriften der beiden Teile zu verhindern.

Über eine im anderen Werkstoffteil 33 angeordnete weitere Bohrung 39, welche mit den beiden in Fig. 4 dargestellten Bohrungen 37 kommuniziert und welche weitere Bohrung 39 von aussen zugänglich ist, wird nun schliesslich ein selbsthärtender Klebstoff injiziert, derart, dass die beiden Lochungen 37 vollständig ausgefüllt werden. Damit auch eine gute Verteilung des injizierten Klebstoffes entlang des anderen Endes 5 der Stifte 1 ermöglicht wird, sind die in den Fig. 1 bis 3 dargestellten und beschriebenen, längsausgebildeten Einkerbungen 15 und 17 vorgesehen, wie die endständig am anderen Ende angeordnete Bohrung bzw. der Hohlraum 23. Damit das andere Ende 5 des Stiftes bzw. Bolzens fest mit dem anderen Werkstoffteil 33 verbunden werden kann, ist es wesentlich, dass eine gute Verteilung des Klebstoffes ermöglicht wird. Insbesondere ist es auch vorteilhaft, wenn je der andere Endbereich 5 endständig nicht direkt am "Boden" der jeweils anderen Lochung bzw. Bohrung 37 des Werkstoffteiles 33 anliegt, sondern, dass hier ein kleiner Hohlraum bzw. ein Sackloch ausgebildet ist.

Die genaue Vorgehensweise beim erfindungsgemäss beschriebenen Verfahren soll anschliessend noch einmal anhand einer Holz/Holz-Verbindung erklärt werden:

### Phase 1:

Im Holzteil A entsprechend Werkstoffteil 31 und Holzteil B entsprechend Werkstoffteil 33 werden je Dübellöcher 35 bzw. 37 gebohrt. Es ist darauf zu achten, dass die Dübellöcher genau angerissen und gebohrt werden. Ein Spezialbolzen entsprechend demjenigen in Fig. 1 wird im Holzteil A in ein vorgebohrtes Loch mittels dem selbstfurchenden Gewinde eingeschraubt, und zwar bis zum Ende der Gewindfurchen. Holzteil A und Spezialbolzen sind nun fixiert.

### Phase 2:

Das in der Phase 1 bearbeitete Holzstück A mit Spezialbolzen wird nun mit dem Spezialbolzen voran in das vorgebohrte, kongruente Loch des Holzteils B gesteckt. Dank der vorgesehenen Widerhaken, entsprechend den Rückhalteorganen 11 bzw. 13, sind die beiden Holzteile A und B fest miteinander verbunden und halten diese Position auch bei, sofern die Belastung relativ gering bleibt. Gegebenenfalls sind die beiden Holzstücke A und B in einer Presse einzuspannen.

### Phase 3:

Die vorhandenen Leerräume zwischen Holz und Spezialbolzen werden nun mit einem selbsthärtenden, wie beispielsweise einem Zweikomponenten-Klebstoff aufgefüllt. Der Klebstoff verbindet Holz und Metall zu einer Einheit. Als Folge davon ergibt sich eine dauerhafte statische Verbindung.

Bei den in den Fig. 1 bis 4 dargestellten Elementen bzw. Verbindungen handelt es sich selbstverständlich nur um Beispiele, welche dazu dienen, die vorliegende Erfindung besser zu erläutern. Selbstverständlich kann der Stift oder Bolzen andersartig ausgebildet sein, so können beispielsweise an beiden Endbereichen lediglich Rückhalteorgane vorgesehen sein, und es muss nicht zwingend ein selbstfurchendes Gewinde angeordnet werden. Es versteht sich von selbst, dass nicht nur zwei Bolzen bzw. Stifte anzuordnen sind, wie in Fig. 4 dargestellt, sondern, dass je nach Verbindungsfläche auch wesentlich mehr Verbindungsstifte verwendet werden können. Auch die für die Injektion des Klebstoffes vorgesehene Bohrung kann andersartig ausgebildet werden, und selbstverständlich können auch mehrere Bohrungen verwendet werden, welche mit mindestens einem Teil der durch die Stifte ausgefüllten Lochungen bzw. Bohrungen kommunizieren.

Schliesslich können verschiedenartige Klebstoffe injiziert werden, um die Verfestigung zwischen Stift und jeweiligem Werkstoffteil herzustellen, wie selbsthärtende Einkomponenten-, Zweikomponenten-Kleber, Kunstharzkleber, Hotmelt-Kleber etc. An sich ist eine Vielzahl von verschiedensten Klebstoffen bekannt, welche für die Applikation bei Injektionen verwendet werden können und welche aus dem Stand der Technik bestens bekannt sind.

## Patentansprüche

1. Verfahren zum Verbinden zweier Werkstoffteile (31, 33) entlang eines gemeinsamen flächigen Bereiches (9), **dadurch gekennzeichnet, dass** in Lochungen (35) im flächigen Bereich des einen Teils (31) bolzenartige oder stiftartige Elemente (1) mit ihrem einen Ende (3) eingeführt und fest angeordnet werden, dass anschliessend das andere Teil (33) mit im anderen flächigen Bereich kongruent angeordneten Lochungen bzw. Bohrungen (37) über die anderen Enden (5) der bolzenoder stiftartigen Elemente (1) aufgesetzt und die beiden flächigen Bereiche (9', 9") aneinandergefügt werden, und schliesslich, dass in mindestens einem Teil der Bohrungen mindestens im anderen Teil ein härtender Klebstoff injiziert wird, um mindestens die anderen Enden (5) der Bolzen bzw. Stifte (1) fest mit dem anderen Teil (33) zu verbinden.

2. Verfahren, insbesondere nach Anspruch 1, **dadurch gekennzeichnet, dass** der härtende Klebstoff derart injiziert wird, dass auch die einen Enden (3) der Stifte bzw. Bolzen (1) fest mit dem einen Werkstoffteil (31) verbunden werden.

3. Verfahren, insbesondere nach Anspruch 1 oder 2, **dadurch gekennzeichnet, dass** am anderen Ende der bolzenartigen Elemente Rückhalteorgane (11, 13) vorgesehen sind, um beim Aufsetzen des anderen Teils mittels den Bohrungen (37) auf die anderen Enden (5) der Elemente (1) ein Wiederentfernen des anderen Teil (33) von den Elementen bzw. vom einen Teil (31) mindestens zu erschweren, vorzugsweise zu verhindern.

4. Verfahren, insbesondere nach einem der Ansprüche 1 bis 3, **dadurch gekennzeichnet, dass** die bolzen- oder stiftartigen Elemente (1) mit ihrem einen Ende (3) in Bohrungen (35) im einen Teil (31) selbstfurchend eingeschraubt werden.

5. Verfahren, insbesondere nach einem der Ansprüche 1 bis 4, **dadurch gekennzeichnet, dass** die Rückhaltekraft der am anderen Ende (5) der bolzen- oder stiftartigen Elemente (1) in den Bohrungen (37) des anderen Teils (33) mit seitlich vorstehenden, konisch bzw. keilförmig wenigstens teilweise peripher umfassend verlaufenden, zackenartigen Randpartien (11, 13) erzeugt wird.

6. Verfahren, insbesondere nach einem der Ansprüche 1 bis 5, **dadurch gekennzeichnet, dass** die beiden Werkstoffteile (31, 33) mittels einer Haltevorrichtung, wie insbesondere mittels einer Presse, zusammengehalten werden, um beim Injizieren des härtenden Klebstoffes ein Auseinandertriften der beiden Teile zu verhindern.

7. Verfahren, insbesondere nach einem der Ansprüche 1 bis 6, **dadurch gekennzeichnet, dass** im anderen Teil (33) mindestens eine mit wenigsten einem Teil der Bohrungen (37) kommunizierende weitere Lochung bzw. Bohrung (39) vorgesehen ist, welche auch bei zusammengefügten Werkstoffteilen (31, 33) von aussen zugänglich ist und durch welche nach Zusammenfügen der Teile der härtende Klebstoff injiziert wird.

8. Verfahren, insbesondere nach einem der Ansprüche 1 bis 7, **dadurch gekennzeichnet, dass** ein selbsthärtender Zweikomponenten-Kleber, wie vorzugsweise ein kalthärtender Zweikomponenten-Kleber, verwendet wird und unter Druck injiziert wird.

9. Verfahren, insbesondere nach einem der Ansprüche 1 bis 8, **dadurch gekennzeichnet, dass** am anderen Ende (5) des Bolzens oder Stifts (1) seitlich längsverlaufende Vertiefungen bzw. Kerbungen (15, 17) vorgesehen sind, sowie gegebenenfalls endständig in der Bohrung bzw. Lochung (37) des anderen Teils ein Freiraum, um eine gute Verteilung und ein gutes Fliessen des Klebstoffes bei der Injektion bzw. Applikation in den Lochungen und entlang des Stifts bzw. Bolzens zu ermöglichen.

10. Verfahren, insbesondere nach einem der Ansprüche 1 bis 9, **dadurch gekennzeichnet, dass** der Bolzen bzw. Stift mindestens endständig im Bereich des anderen Endes wenigstens teilweise eine Bohrung aufweist bzw. hohl ausgebildet ist, um ein Einfliessen des Klebstoffes ins Innere des Endbereiches des Bolzens zu ermöglichen.

11. Verfahren nach einem der Ansprüche 1 bis 10, **dadurch gekennzeichnet, dass** mindestens ein Bolzen aus einem metallenen Werkstoff wie Stahl oder Aluminium oder aus einem polymeren Werkstoff, wie insbesondere einem verstärkten Kunststoff, oder aus Holz verwendet wird.

12. Verwendung des Verfahrens zum Zusammenfügen zweier Holzstücke bzw. Holzteile zur Herstellung einer geleimten unlösbaren Holzverbindung.

13. Verwendung des Verfahrens nach einer der Ansprüche 1 bis 11 zum Zusammenfügen zweier Metallkörper, zum Zusammenfügen von einem Metallkörper mit einem Holzteil, zum Zusammenfügen von einem Holzkörper mit einem Körper aus einem polymeren Werkstoff oder zum Zusammenfügen von einem metallenen mit einem Körper aus einem polymeren Material.

14. Holz/Holz-Verbindung, hergestellt mittels eines Verfahrens nach einem der Ansprüche 1 bis 11.

15. Metall/Metall-Verbindung, Holz/Metall-Verbindung, Metall/Polymer-Verbindung oder Holz/Polymer-Verbindung hergestellt mittels eines Verfahrens nach einem der Ansprüche 1 bis 11.
